# EUROPÄISCHE PATENTSCHRIFT

(11) **EP 0 655 611 B1**
(45) Veröffentlichungstag und Bekanntmachung des Hinweises auf die Patenterteilung: **19.08.1998**
(21) Anmeldenummer: 94115100.3
(22) Anmeldetag: 24.09.1994
(51) Int. Cl.: G01G 13/16, B65D 90/62, G01G 13/00

(54) **Behälter zur Aufnahme von Schüttgut mit einem Doppelkegelverschluss**
Container for bulk material with a double cone closure
Récipient pour des matières en vrac avec une fermeture double cône

(30) Priorität: 26.11.1993 DE 4340355
(43) Veröffentlichungstag der Anmeldung: 31.05.1995
(73) Patentinhaber: FILTERWERK MANN & HUMMEL GMBH, 71631 Ludwigsburg (DE)
(72) Erfinder: Brandauer, Otto, D-75417 Mühlacker (DE); Hoffmann, Peter, D-71691 Freiberg (DE)
(74) Vertreter: Voth, Gerhard, Dipl.-Ing.

(56) Entgegenhaltungen:
- DE-A- 3 515 367
- DE-A- 3 537 426
- DE-A- 3 617 595
- DE-C- 866 177
- FR-A- 2 663 008
- GB-A- 785 495
- US-A- 4 084 626

## Beschreibung

Die Erfindung betrifft einen Behälter zur Aufnahme von Schüttgut.

Beim chargenweisen Verwiegen von Schüttgütern werden Behälterwaagen eingesetzt. Diese Behälterwaagen müssen mit einem bodenseitigen Verschluß ausgerüstet sein, welcher den Wiegebehälter während des Zudosierens der Schüttgüter geschlossen hält und nach Beendigung der Verwiegung einen Auslaß öffnet, der eine rückstandsfreie Entleerung gewährleistet. Zu diesem Zweck werden Drehklappen, Flachschieber oder Quetschventile eingesetzt. Bei Drehklappen ist von Nachteil, daß für den Auslauf nicht der gesamte Auslaufquerschnitt der Bodenöffnung zur Verfügung steht, sondern die Antriebswelle bzw. die Blattdicke der Klappe als störendes Element den Auslauf negativ beeinflußt. Bei Flachschiebern ist von Nachteil, daß sich in der Führung des Schieberblattes Anbackungen und Rückstände bilden und das Verschlußelement nicht restlos dicht ist. Quetschventile weisen ein nachteiliges Öffnungsverhalten auf, da die Gummimanschette mit zunehmendem Alter an Rückstellvermögen einbüßt. Für die drei genannten Verschlußelemente ist ihr hohes Gewicht von Nachteil.

Man könnte nun die genannten Verschlußarten bezüglich Gewicht und Verschlußverhalten optimieren, z. B. durch Verringerung der Toleranzen oder Einsatz anderer Werkstoffe. Dies ist aber einmal kostenaufwendig in der Herstellung, es würde die Vorrichtung daher verteuern, zum anderen dürften sich Probleme im Betrieb einstellen.

Aus der DE-OS 35 15 367 ist ein Behälter mit einem Kegelverschluß bekannt. Dieser Kegelverschluß ist als Kegel mit Kegelstumpf ausgefürht und liegt im geschlossenen Zustand an einem Dichtelement an. Dieses Dichtelement ist ein gummiartiges Material und im Auslaufrohr des Behälters angeordnet. Zum Öffnen des Behälters und zum Dosieren des im Behälter enthaltenen Materials wird der Verschluß nach oben gezogen, wobei er zunächst einen großen Weg zurücklegen muß, bis er in den Innenraum des Behälters eintaucht und dort einen größeren Ringspalt freigibt.

An bzw. auf den Dichtflächen im Auslaufrohr kann sich Material, weil die Dichtflächen im Strömungsschatten des auslaufenden Schüttgutes liegen. Damit trotz Materialablagerungen ein zuverlässiges Schließen des Behälters mit dem Doppelkegel möglich ist, sind weiche Dichtungselemente erforderlich. Darüber hinaus weist der bekannte Verschluß einen größeren Fertigungsaufwand und eine größere Bauhöhe auf.

Es ist auch bekannt, einen Kegel zum Verschließen eines Behälters von unten her an die Auslauföffnung heranzuführen. Dann muß unterhalb des Kegels der Querschnitt wieder erweitert werden, damit zumindest ein Ringspalt zum Abfließen des Behälterinhalts entsteht. Diese Querschnittserweiterung erfordert einen baulichen Mehraufwand. Außerdem befindet sich der Kegel im geöffneten Zustand als ein störendes Element im Materialfluß.

Weiterhin zeigt Figur 1 der FR-A-2663008 einen noch angeordneten sich drehenden Doppelkegel.

Es ist somit Aufgabe der Erfindung, eine Vorrichtung der eingangs genannten Art dahingehend zu verbessern, daß ein einfacher, billiger und leicht zu öffnender bzw. zu schließender Verschluß geschaffen wird, der insbesondere ein geringes Gewicht aufweist. Erfindungsgemäß wird diese Aufgabe durch den Anspruch 1 gelöst.

Dieser als Doppelkegel ausgebildete Schließkörper verschließt den Auslaß von oben her und wird zusätzlich vom Staudruck des Schüttguts unterstützt. Beim Öffnen des Verschlusses wird bei entsprechender Hubhöhe der gesamte Behälterauslaufquerschnitt freigegeben, so daß das Produkt ungehindert ausströmen kann. Brückenbildung wird so vorgebeugt, Anlagerungen an den Verschlußelementen werden verhindert.

Ein wesentlicher Vorteil der Erfindung ist darin zu sehen, daß der im Behälterauslauf angeordnete Doppelkegel im Erweiterungsbereich des Behälters angeordnet ist. Wird dieser zum Öffnen nach oben gezogen, so kann das Material nahezu ungehindert ausfließen. Der Ringspalt wird bei einer relativ kleinen Hubbewegung bereits so groß, daß der Querschnitts des Ringspalts dem Durchlaßquerschnitt des zylindrischen Ausgangs entspricht.

Ein weiterer Vorteil der Erfindung ist darin zu sehen, daß die Dichtflächen, und zwar sowohl am Behälter als auch am Doppelkegel in der stark aktivierten Auslaufzone angeordnet sind, d. h. daß an diesen Stellen das Material mit hoher Geschwindigkeit vorbeiströmt. Anlagerungen und Anbackungen von Material sind in diesem Bereich völlig ausgeschlossen. Damit besteht die Möglichkeit, ohne zusätzliche Dichtelemente wie Gummis oder Gummidichtungen oder andere weiche Dichtelemente eine zuverlässige Abdichtung des Behälters zu gewährleisten.

Vorteilhafte Weiterbildungen der Erfindung ergeben sich aus den Unteransprüchen.

Die Erfindung wird nachfolgend anhand eines Ausführungsbeispiels näher erläutert. Es zeigt:

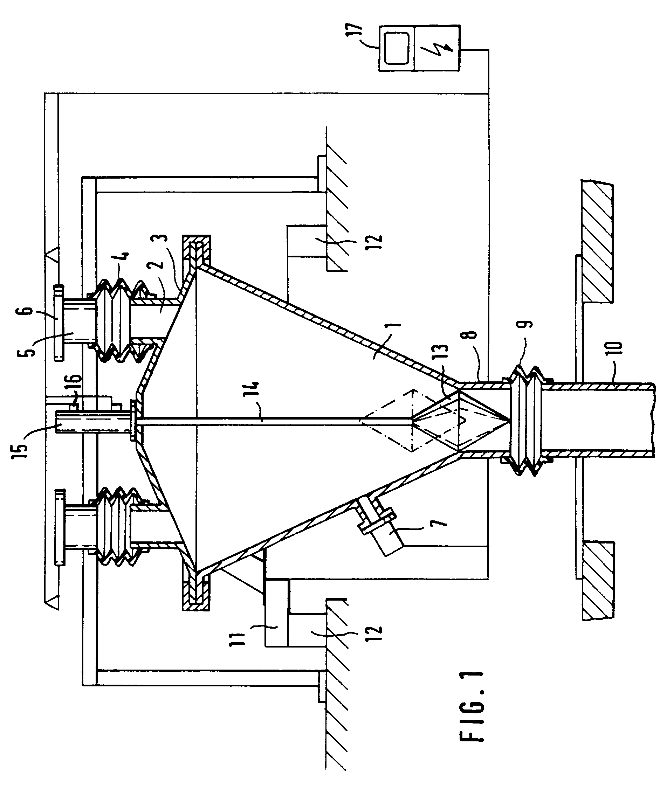

- Figur 1: 1 eine Darstellung der Verwiegeeinrichtung.
- Figur 2: Detaildarstellung des Verschlusses.

Die Vorrichtung zur Verwiegung von Schüttgütern besteht aus einem Behälter 1, der mehrere Materialeinlaufstutzen 2 an einem dicht schließenden Deckel 3 aufweist.

Die Materialeinlaufstutzen 2 sind über flexible Manschetten 4 mit Materialzuführungsöffnungen 5 verbunden, die mit Schnellschlußklappen 6 versehen sind, um somit die Materialzufuhr bei Erreichen eines gewünschten Gewichtswertes schlagartig abstellen zu können. Weiter weist der Behälter einen pneumatischen Klopfer oder Rüttler 7 zur restlosen Entleerung auf. Der Auslauf 8 des Behälters ist mit einer flexiblen Manschette 9, mit einem darunter befindlichen Fallrohr 10 oder einem Sammelgefäß verbunden.

Behälter 1 ist auf einem fest verankerten Wiegerahmen 12, auf dem eine oder mehrere Druckmeßdosen 11 befestigt sind, angeschraubt. Gewichtsänderungen des Systems werden über die Druckmeßdosen 11 an ein MSR-System 17 übermittelt. Der Auslaßschließkörper ist als im Behälterinneren beweglicher Doppelkegel 13 ausgebildet, der über eine Zugstange 14 mit einem Pneumatikzylinder 15 verbunden ist. Am Pneumatikzylinder 15 sind Näherungsinitiatoren 16 angebracht, die dem MSR-System 17 den Zustand des Behälterauslaufes signalisieren.

Während des Einwiegens verharrt der Doppelkegel 13 in Schließstellung.

Zum Entleeren des Behälters 1 wird der Doppelkegel 13 mittels des Pneumatikzylinders 15 und der Stange 14 in eine den Ausfluß des Schüttguts nicht störende Position gebracht. Der Doppelkegel 13 wird so beim Auslaufen des Schüttguts im Behälterinneren allseitig von Material umspült, so daß sich keine Anbackungen und Rückstände am Doppelkegel 13 und am Auslaß bilden können. Beim Öffnen des Auslasses wirkt Doppelkegel 13 Brückenbildungen im Behälterinneren entgegen.

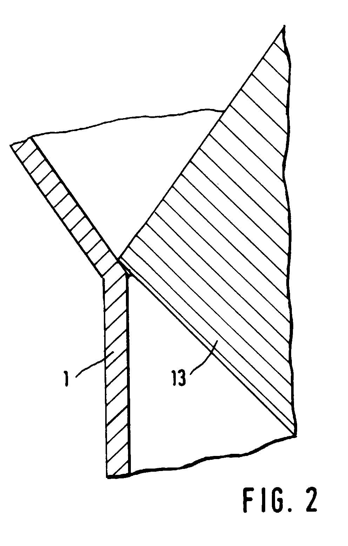

In Figur 2 ist in einer Detaildarstellung der Dichtbereich zwischen Behälter und Doppelkegel dargestellt. Der Doppelkegel liegt unmittelbar am engsten Bereich des Behälterkonusses an der Behälterinnenwand an. Der untere Kegel des Verschlußelements weist einen geringfügig stumpferen Winkel auf als der Neigungswinkel des Behälterkonusses. Damit wird ein Klemmen des Doppelkegels 13 verhindert.

## Patentansprüche

1. Behälter zur Aufnahme von Schüttgut, der wenigstens einen Materialeinlaufstutzen (2) aufweist und über einen Deckel (3) und einen dicht schließenden Auslaß verfügt, wobei der Behälter im unteren Bereich trichterförmig ausgestaltet ist und der Auslauf (8) näherungsweise konzentrisch zu dem trichterförmigen Bereich angeordnet ist und wobei ein Auslaßschließkörper in Form eines Doppelkegels (13) im Behälterinneren axialbeweglich angeordnet ist und der Doppelkegel (13) den Behälter unmittelbar am Behälterkonusübergang zum Auslauf (8) abdichtet und verschließt und damit der engste Bereich des Behälterkonusses als Dichtfläche ausgestaltet ist.

2. Behälter nach Anspruch 1, dadurch gekennzeichnet, daß das im Behälter enthaltene Schüttgut gravimetrisch erfaßbar ist.

3. Behälter nach einem der vorhergehenden Ansprüche, dadurch gekennzeichnet, daß der Neigungswinkel des unteren Doppelkegels des Auslaßschließkörpers näherungsweise dem Neigungswinkel des Auslauftrichters des Behälters entspricht oder geringfügig größer ist.

4. Behälter nach einem der vorgenannten Ansprüche, dadurch gekennzeichnet, daß der Doppelkegel (13) im Inneren des Behälters über eine Stange (14) betätigbar ist.

5. Behälter nach Anspruch 4, dadurch gekennzeichnet, daß ein Pneumatikzylinder (15) die Stange (14) auf- und abbewegt.

6. Behälter nach einem der vorgenannten Ansprüche, dadurch gekennzeichnet, daß die Stellung des Absperrorgans über Näherungsinitiatoren (16) signalisierbar ist.

7. Behälter nach einem der vorgenannten Ansprüche, dadurch gekennzeichnet, daß die Materialeinlaufstutzen (2) über flexible Manschetten (4) mit den Materialzuführungsöffnungen (5) verbunden sind.

8. Behälter nach einem der vorgenannten Ansprüche, dadurch gekennzeichnet, daß die Materialzuführungsöffnungen (5) mit Schnellschlußklappen (6) versehen sind.

9. Behälter nach einem der vorgenannten Ansprüche, dadurch gekennzeichnet, daß am Behälter (1) ein Rüttler (7) befestigt ist.

10. Behälter nach einem der vorgenannten Ansprüche, dadurch gekennzeichnet, daß am Auslauf (8) des Behälters eine flexible Manschette (9) mit einem darunter befindlichen Fallrohr (10) oder einem Sammelbehälter befestigt ist.

11. Behälter nach einem der vorgenannten Ansprüche, dadurch gekennzeichnet, daß der Behälter (1) auf einen fest verankerten Wiegerahmen (12), auf dem eine oder mehrere Druckmeßdosen (11) befestigt sind, angeschraubt ist.

## Claims

1. Container for accommodating loose material, which container includes at least one material inlet duct (2) and has a cover (3) and a tightly closing outlet, the container having a funnel-shaped configuration in the lower region, and the outlet (8) being disposed approximately concentrically relative to the funnel-shaped region, and an outlet closing member, in the form of a double cone (13), being axially displaceably disposed in the container interior, and the double cone (13) sealing and closing the container directly at the container cone transition to the outlet (8), and the narrowest region of the container cone being thus configured as a sealing face.

2. Container according to claim 1, characterised in that the loose material, which is contained in the container, is gravimetrically determinable.

3. Container according to one of the preceding claims, characterised in that the angle of inclination of the lower double cone of the outlet closing member corresponds approximately to, or is slightly greater than, the angle of inclination of the funnel-shaped outlet of the container.

4. Container according to one of the aforementioned claims, characterised in that the double cone (13) is displaceable in the interior of the container via a rod (14).

5. Container according to claim 4, characterised in that a pneumatic cylinder (15) moves the rod (14) upwardly and downwardly.

6. Container according to one of the aforementioned claims, characterised in that the position of the shut-off device is indicated via proximity initiators (16).

7. Container according to one of the aforementioned claims, characterised in that the material inlet ducts (2) are connected to the material supply apertures (5) via flexible sleeves (4).

8. Container according to one of the aforementioned claims, characterised in that the material supply apertures (5) are provided with quick-closing shutters (6).

9. Container according to one of the aforementioned claims, charact.erised in that a vibrator (7) is mounted on the container (1).

10. Container according to one of the aforementioned claims, characterised in that a flexible sleeve (9), together with a down pipe (10) situated therebelow or a collecting vessel, is mounted at the outlet (8) of the container.

11. Container according to one of the aforementioned claims, characterised in that the container (1) is screwed onto a firmly anchored weighing frame (12), on which one or more pressure cells (11) are mounted.

## Revendications

1. Récipient pour recevoir des matières en vrac comportant au moins une tubulure (2) d'amenée des matières et disposant d'un couvercle et d'une vidange à fermeture étanche, le récipient présentant à sa partie inférieure la forme d'un entonnoir prolongé par une sortie sensiblement concentrique à cette partie, tandis qu'un corps obturateur de vidange ayant la forme d'un double cône (13) peut se déplacer axialement à l'intérieur du récipient, le double cône (13) assurant l'étanchéité et l'obturation directement au niveau de la zone de passage du récipient à la sortie (8) de sorte que c'est la plus petite zone du cône du récipient qui constitue la portée d'étanchéité.

2. Récipient selon la revendication 1,
caractérisé en ce que
la matière en vrac contenue dans le récipient peut être déterminée gravimétriquement.

3. Récipient selon une des revendications précédentes,
caractérisé en ce que
l'angle de pente du double cône inférieur du corps obturateur est sensiblement égal ou un peu inférieur à l'angle de pente de l'entonnoir de sortie du récipient.

4. Récipient selon une des revendications précédentes,
caractérisé en ce que
le double cône (13) peut être manoeuvré à l'intérieur du récipient par l'intermédiaire d'une tige (14).

5. Récipient selon une des revendications précédentes,
caractérisé en ce qu'
un vérin pneumatique (15) élève ou abaisse la tige (14)

6. Récipient selon une des revendications précédentes,
caractérisé en ce que
la position de l'organe d'arrêt est signalée par des initiateurs d'approche (16).

7. Récipient selon une des revendications précédentes,
caractérisé en ce que
les tubulures (2) d'amenée des matières sont reliées par des manchettes flexibles (4) aux orifices (5) d'entrée des matières.

8. Récipient selon une des revendications précédentes,
caractérisé en ce que
les orifices (5) d'entrée des matières sont équipés de clapets à fermeture rapide (6).

9. Récipient selon une des revendications précédentes,
caractérisé en ce qu'
un vibreur (7) est fixé sur le récipient (1).

10. Récipient selon une des revendications précédentes,
caractérisé en ce qu'
à la sortie (8) du récipient est fixée une manchette flexible (9) se prolongeant en bas par un tube de chute (10) ou un récipient collecteur.

11. Récipient selon une des revendications précédentes,
caractérisé en ce que
le récipient (1) est vissé sur un cadre de pesage (12) solidement ancré et sur lequel sont fixés un ou plusieurs dynamomètres de pression (11).
